# EUROPÄISCHE PATENTANMELDUNG

(11) **EP 0 523 331 A1**
(43) Veröffentlichungstag der Anmeldung: **20.01.1993**
(21) Anmeldenummer: 92107333.4
(22) Anmeldetag: 29.04.1992
(51) Int. Cl.: B01D 39/10, C25D 1/08

(54) **Verfahren zum Herstellen eines Filtermaterials**

(30) Priorität: 17.07.1991 DE 4123708
(71) Anmelder: MAXS AG, CH-6072 Sachseln (CH)
(72) Erfinder: Maner, Asim, Dr., CH-6064 Kerns (CH)
(74) Vertreter: Grünecker, Kinkeldey, Stockmair & Schwanhäusser Anwaltssozietät

(57) **Zusammenfassung**

Um auf einfache Weise durch glavanisches Abscheiden von Metall ein Filtermaterial mit sehr kleinen Filteröffnungen und einer verhältnismäßig großen offenen Fläche zu erreichen, sieht die Erfindung vor, daß man auf einem Substrat (1) eine Klebstoffschicht (2) aufbringt, die von einer elektrisch leitfähigen Struktur (2)(3) durchsetzt ist. In der Klebstoffschicht werden durch Beflocken elektrisch isolierende und faserförmige Flockstäbchen (4) verankert, wonach man auf das beflockte Substrat galvanisch Metall abscheidet und dabei die elektrisch leitfähige Struktur als Kathode verwendet. Im Anschluß daran wird die so erzeugte Metallschicht (5) vom Substrat abgezogen, wonach die Klebstoffschicht und die Flockstäbchen mit Hilfe eines Lösungsmittels ausgewaschen werden. Das so erhaltene Filtermaterial weist eine Vielzahl von im Durchmesser nahezu gleichen Mikrokanälen auf und kann eine Dicke besitzen, die die Nennweite der Mikrokanäle um mindestens eine Größenordnung übersteigt.

## Beschreibung

Die Erfindung bezieht sich auf ein Verfahren zum Herstellen eines Filtermaterials, bei dem man durch galvanisches Abscheiden von Metall auf einem Substrat eine zusammenhängende, mit Mikroöffnungen versehene Metallschicht erzeugt, die man anschließend von dem Substrat trennt,und auf ein entsprechendes Filtermaterial.

Bislang hat man derartige Filtermaterialien in Form von Filterfolien hergestellt, indem man einerseits auf lithographisch strukturierte Matrizen galvanisch Metall abgeschieden hat, oder indem man andererseits Metallfolien partiell mit Resistfilmen abgedeckt und geätzt hat. Beide Methoden haben die Eigenschaft, daß mit abnehmenden Abmessungen der Filteröffnungen die Dicke der Filterfolien ebenfalls klein gewählt werden muß. Als Faustregel gilt, daß die Foliendicke nicht wesentlich größer als die Weite der Öffnungen sein kann. Dies führt dazu, daß bei sehr kleinen Öffnungen, etwa unterhalb von 50 Mikrometern, die Folien so dünn sind, daß sie nicht mehr gut handhabbar bzw. mechanisch belastbar sind. Ein weiterer Nachteil der bekannten Herstellungsmethoden ist, daß die offene Filterfläche bei Filtern mit kleinen Öffnungen stark abnimmt. Außerdem nimmt bei Filtern mit kleinen Filteröffnungen die Varianz der Lochweite stark zu. So kann bei Filteröffnungen von einigen 10 Mikrometern die Toleranz der Öffnungsweite ein Mehrfaches der Nennweite betragen. Wenn man eine solche große Streuung der Lochweite nicht tolerieren kann, muß man die bekannten Filterfolien durch wesentlich aufwendigere Methoden, z.B. eine Kombination aus Röntgenlithographie und Galvanik, herstellen.

Es ist Aufgabe der vorliegenden Erfindung, ein Filtermaterial der eingangs genannten Art und ein Verfahren zu dessen Herstellung zur Verfügung zu stellen, das es gestattet, auf einfache Weise einen flächigen Metallfilter herzustellen, dessen Dicke, bezogen auf die Weite der Mikroöffnungen verhältnismäßig groß sein kann, der eine verhältnismäßig große offene Filterfläche und verhältnismäßig geringe Lochweitentoleranzen aufweist.

Diese Aufgabe wird hinsichtlich des Verfahrens dadurch gelöst, daß man
a) zunächst auf dem Substrat eine Klebstoffschicht aufbringt, die von einer elektrisch leitfähigen Struktur durchsetzt ist,
b) durch Beflocken in der Klebstoffschicht elektrisch isolierende und faserförmige Flockstäbchen verankert,
c) nach dem Abtrocknen der Klebstoffschicht auf das beflockte Substrat galvanisch Metall abscheidet und dabei die elektrisch leitfähige Struktur als Elektrode verwendet, und
d) danach die so erzeugte Metallschicht vom Substrat trennt und die Klebstoffschicht sowie die Flockstäbchen von der Metallschicht entfernt.

Dieses Verfahren ist einfach und ermöglicht die Herstellung eines Filtermaterials, das eine Dicke aufweisen kann, die bezogen auf die Lochweite um einen Faktor 10 bis möglicherweise 100 größer ist.

Nachdem die Mikroöffnungen in dem Metallfilter durch den Durchmesser der Flockstäbchen bestimmt sind, ist auch die Toleranz der Lochweite verhältnismäßig klein. In dem Metallfilter entstehen lange und dünne Filterkanäle mit sehr geringer Breitenschwankung, die unterhalb von 10 bzw. 20% der Kanalweite liegt.

Das Beflocken von Metalloberflächen mit Flockstäbchen wird in anderen Bereichen der Technik bereits seit längerem dazu angewendet, um z.B. die Wärmeleitfähigkeit von Metalloberflächen herabzusetzen, damit sich ein angenehmerer Griffkontakt einstellt. Weitere Beispiele sind in dem Artikel "Flor für anspruchsvolle Oberflächen" von U. Maag, Gomaringen, in Metalloberfläche 45 (1991) 4, (Sonderteil in Hanser-Fachzeitschriften, April 1991), beschrieben.

Gemäß einer ersten bevorzugten Ausführungsform kann man als elektrisch leitfähige Struktur ein Metallnetz verwenden, das man nach dem Auftragen der Klebstoffschicht auf das Substrat zumindest teilweise in die Klebstoffschicht eindrückt. In den Maschen des Metallnetzes liegt dann die für den Beflockungsvorgang wirksame Klebstoffschicht. Wenngleich die Stege des Metallnetzes auf diese Weise nicht beflockt werden, hat die Verwendung des Metallnetzes jedoch den Vorteil, daß eine besonders regelmäßige elektrisch leitfähige Struktur vorliegt, was die Herstellung eines gleichmäßigen Filtermaterials begünstigt.

Gemäß einer zweiten, ebenfalls bevorzugten Ausführungsform kann man zum Erzeugen der elektrisch leitfähigen Struktur auch ein zumindest an seiner Oberfläche aus einem elektrisch leitfähigen Material bestehendes Substrat verwenden, wobei man dann die Klebstoffschicht in gleichmäßig strukturierter Form, vorzugsweise durch Siebdruck, so auf das Substrat aufträgt, daß dessen Oberfläche nur partiell von der Klebstoffschicht bedeckt ist, wobei die nicht bedeckten Partien der Substratoberfläche die elektrisch leitfähige Struktur bilden.

Wenn man zum Erzeugen der Klebstoffschicht einen elektrisch leitfähigen Kleber verwendet, so daß die Klebstoffschicht zugleich auch die elektrisch leitfähige Struktur bildet, kann man die aktive Filterfläche des Filtermaterials noch weiter vergrößern. In diesem Zusammenhang bietet sich für bestimmte Filtermaterialien an, daß man zum Erzeugen der Klebstoffschicht eine Metallschmelze und als Flockstäbchen eine hitzebeständige Faser, z.B. Glasfaserabschnitte, verwendet. Während des Beflockens muß das Substrat oberhalb Schmelztemperatur des als Kleber verwendeten Metalls gehalten werden.

Besonders bevorzugt bei dem erfindungsgemäßen Verfahren wird, wenn man Flockstäbchen verwendet, die man mit einem Lösungsmittel aus der Metallschicht auswaschen kann. Bevorzugt werden hier z.B. Viskosefasern, die man mit Schwefelsäure auflösen kann, oder nicht vernetztes Polymethamethylacrylat, das sich mit Dichlormethan auflösen läßt. Es ist aber ebenfalls denkbar, Glasfaserabschnitte zu verwenden, die sich durch Flußsäure auflösen lassen.

Schließlich wird die eingangs gestellte Aufgabe auch durch ein Filtermaterial aus einer durch galvanisches Abscheiden hergestellten, mit Mikroöffnungen versehenen Metallschicht gelöst, das dadurch hergestellt wird, daß in der Metallschicht eine Vielzahl von sich im wesentlichen parallel zueinander und von einer Schichtseite zur anderen Schichtseite erstreckende, aus der Schicht beidseitig herausragende Fasern eingelagert wurden, die zur Bildung der Mikroöffnungen aus der Metallschicht herausgelöst sind. Auf diese Weise läßt sich die Dicke des Filtermaterials im wesentlichen unabhängig von der Weite der Mikroöffnungen festlegen. Die Weite der Mikroöffnungen ist im wesentlichen nur durch die Dicke der einzelnen Fasern bestimmt, wodurch sich auch eine sehr geringe Toleranzschwankung bei der Lochweite der Mikroöffnungen erzielen läßt.

Im folgenden werden Ausführungsbeispiele der Erfindung anhand einer Zeichnung näher erläutert. Es zeigen:
- **Fig. 1**: in den Schritten 1A bis 1E ein erstes Ausführungsbeispiel zum Herstellen des erfindungsgemäßen Filtermaterials,
- **Fig. 2**: in den Schritten 2A bis 2D ein zweites Ausführungsbeispiel zum Herstellen des erfindungsgemäßen Filtermaterials, und
- **Fig. 3**: in den Schritten 3A bis 3D ein weiteres Ausführungsbeispiel zum Herstellen des erfindungsgemäßen Filtermaterials.

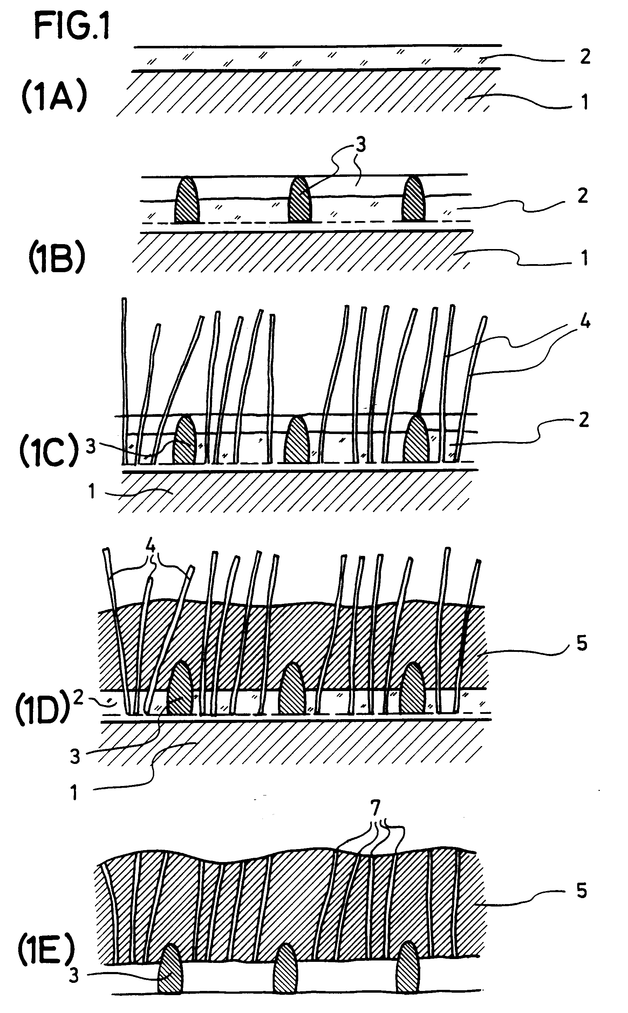

Zunächst wird anhand der Fig. 1 ein erstes Ausführungsbeispiel beschrieben. Zum Herstellen des Filtermaterials wird zunächst eine 3 mm starke Aluminiumplatte 1 als Substrat mit einer etwa 25 bis 30 Mikrometern (my) dicken Klebstoffschicht 2 versehen. Als Kleber wurde ein im Handel allgemein erhältlicher 2-Komponenten-Kleber auf Polyurethanbasis verwendet, der nach entsprechender Verdünnung mit Lösungsmittel mit Hilfe einer Spritzpistole auf die Aluminiumplatte aufgetragen wurde (vgl. Schritt 1A).

Im Schritt 1B wird ein Metallnetz 3 so in die Klebstoffschicht 2 hineingedrückt, daß es mit seinem oberen Teil noch aus der Klebstoffschicht 2 hinausragt. Bei dem in dem hier gezeigten Ausführungsbeispiel verwendeten Metallnetz handelt es sich um ein galvanisch hergestelltes Metallnetz mit einer Sechseck-Wabenstruktur mit einer Dicke von 65 Mikrometern, einer Lochweite von 115 Mikrometern, einer Wandstärke von 50 Mikrometern und einer offenen Fläche von ca. 50%. Das Material des Metallnetzes ist Nickel.

Im Schritt 1C wird das auf diese Weise präparierte Substrat 1 mit der noch feuchten Klebstoffschicht mit Schnittflock aus Viskosefasern mit 0,3 mm Länge und einem Durchmesser von 14 Mikrometern auf an sich bekannte Weise unter Zuhilfenahme von 50 kV Hochspannung beflockt. Dabei werden die Flockstäbchen einzeln innerhalb der Wandung des Metallnetzes 3 in der Klebstoffschicht 2 verankert.

Nach einer Trocknungszeit für die Klebstoffschicht von 8 Stunden wird im Schritt 1D das beflockte Substrat 1 in ein Nickelsulfamat-Galvanikbad eingetaucht, wobei das Metallnetz 3 als Kathode geschaltet wird. Bei 55^{o} C und einer Stromdichte von 2 A/dm² wird 6 Stunden lang Nickel auf das Substrat 3 abgeschieden. Die auf dem Metallnetz 3 aufwachsende Nickelschicht 5 schließt sich, schließt dabei die Flockstäbchen ein und erreicht eine mittlere Dicke von ca. 150 Mikrometern, wobei die Flockstäbchen nach oben aus der Metallschicht 5 noch herausragen.

Anschließend wird die Metallschicht 5 zusammen mit dem darin eingebetteten Metallnetz 3 von der Aluminiumplatte 1 abgezogen, wobei die Klebstoffschicht 2 mit den Flockstäbchen 4 an der Metallschicht 5 hängenbleibt. Die Metallschicht wird bei Raumtemperatur in eine 48%ige Schwefelsäure gelegt, in der sich die Klebstoffschicht 2 und die Flockstäbchen 4 mit Ultraschallunterstützung innerhalb von 40 Minuten auflösen.

Als Ergebnis erhält man einen flächigen Metallfilter aus Nickel mit einer durchschnittlichen Dicke von etwa 150 Mikrometern, der pro mm² Fläche durchschnittlich 202 durchgehende Filterkanäle 7 mit einem einheitlichen Durchmesser von 14 Mikrometern enthält. Dies entspricht einer offenen Filterfläche von etwa 3%. Ein auf herkömmliche Weise galvanisch hergestellter Filter mit 150 Mikrometern Dicke und einer Öffnungsweite von 14 Mikrometern hätte dagegen eine offene Filterfläche von nur 0,15%. Um auf herkömmliche Weise einen Filter mit 3% offener Filterfläche und 14 Mikrometer weiten Öffnungen zu erreichen, dürfte ein solcher Filter höchstens eine Dicke von nur 8 bis 9 Mikrometern aufweisen, wodurch er nicht mehr handhabbar wäre.

Das Metallnetz 3, das nun in die Nickelschicht 5 teilweise eingebettet ist, stört normalerweise nicht und kann als eine zusätzliche Stützstruktur dienen. Sollte das Metallnetz nicht erwünscht sein, so kann man es aus einem anderen Material als das Material des Filters wählen und zum Schluß durch selektives Ätzen entfernen. Z.B. könnte das Metallnetz aus Kupfer bestehen und mit einer Kupferchloridlösung selektiv gegen Nickel weggeätzt werden.

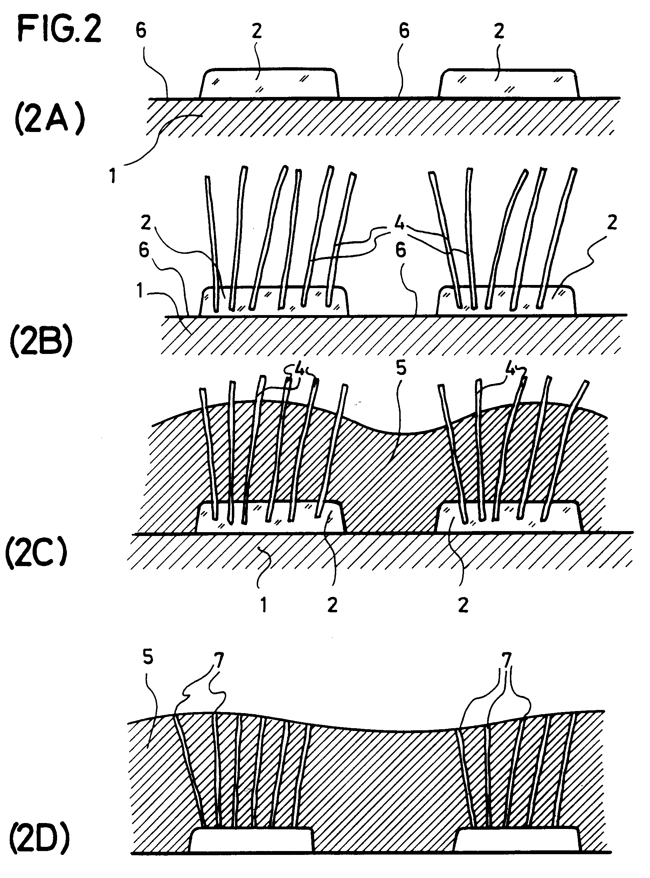

Für das in Fig. 2 beschriebene Ausführungsbeispiel werden für gleiche und gleichartige Komponenten identische Bezugszeichen verwendet. Im folgenden wird nur auf die Unterschiede zum Ausführungsbeispiel gemäß Fig. 1 eingegangen.

Anstelle des Einbettens eines Metallnetzes als elektrisch leitende Struktur bringt man auf die Aluminiumplatte 1 die Klebstoffschicht durch Siebdruck auf. Genau genommen besteht die Klebstoffschicht dann aus kreisförmigen Klebstoffinseln 2, die von metallenen, freiliegenden Oberflächenbereichen 6 des Substrates umgeben werden (vgl. Schritt 2A).

In den Schritten 2B bis 2D wird das Substrat 1 wie beim Ausführungsbeispiel gemäß Fig. 1 mit Flockstäbchen 4 beflockt, wonach auf die freiliegenden Oberflächenbereiche 6 des Substrats 1 galvanisch Metall abgeschieden wird. Die so entstandene Metallschicht 5 wird abgetrennt, wonach die Flockstäbchen 4 chemisch aufgelöst werden. Bei diesem Ausführungsbeispiel werden als Flockstäbchen Fasern aus nicht vernetztem Polymethamethylacrylat (PMMA) verwendet, die mit Hilfe von Dichlormethan aus der Metallschicht 5 herausgewaschen werden, so daß wiederum den Metallfilter 5 durchdringende Filterkanäle 7 einheitlichen Durchmessers erhalten werden.

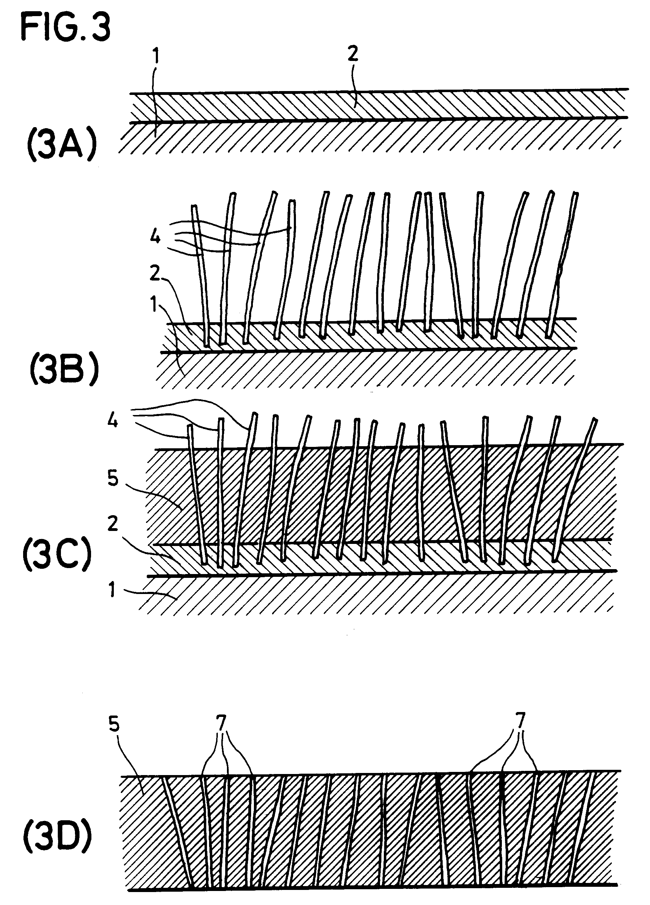

Schließlich wird im folgenden anhand der Fig. 3 noch ein weiteres Ausführungsbeispiel beschrieben, wobei für gleiche und ähnliche Komponenten wieder identische Bezugszeichen verwendet werden. Es werden lediglich die Unterschiede zu den beiden vorhergehenden Ausführungsbeispielen beschrieben.

Bei diesem Ausführungsbeispiel wird die Aluminiumplatte 1 in eine Zinnschmelze eingetaucht, so daß nach dem Herausnehmen der Aluminiumplatte 1 aus der Zinnschmelze auf der Oberseite eine dünne Schicht 2 aus Zinn verbleibt. Zum Beflocken im Schritt 3B wird die Aluminiumplatte oberhalb der Schmelztemperatur des Zinns (232^{o}) auf einer Temperatur von ca. 240^{o} gehalten. Zum Beflocken werden Glasfaserabschnitte 4 verwendet, die sich in der Zinnschmelze 2 verankern. Anschließend wird das Substrat 1 abgekühlt. Im Schritt 3C wird wie bei den obigen Ausführungsbeispielen auch eine Nickelschicht 5 abgeschieden.

Im Schritt 3D wird die Zinnschicht entfernt, wonach die Glasfasern mit Flußsäure und Ultraschallunterstützung ausgewaschen werden. Man erhält so ein Filtermaterial, das über die gesamte Fläche gleichmäßig mit Filterkanälen versehen ist.

Anstelle von Zinn kann man auch andere, bei niedrigen Temperaturen schmelzende Metalle für die Klebeschicht 2 verwenden, so z.B. Blei oder Zink.

## Patentansprüche

1. Verfahren zum Herstellen eines Filtermaterials, bei dem man durch galvanisches Abscheiden von Metall auf einem Substrat (1) eine zusammenhängende, mit Mikroöffnungen versehene Metallschicht (5) erzeugt, die man anschließend von dem Substrat (1) trennt, **dadurch gekennzeichnet**, daß man
a) zunächst auf dem Substrat (1) eine Klebstoffschicht (2) aufbringt, die von einer elektrisch leitfähigen Struktur (2, 3, 6) durchsetzt ist,
b) durch Beflocken in der Klebstoffschicht (2) elektrisch isolierende und faserförmige Flockstäbchen (4) verankert,
c) nach dem Abtrocknen der Klebstoffschicht (2) auf das beflockte Substrat galvanisch Metall abscheidet und dabei die elektrisch leitfähige Struktur (2, 3, 6) als Elektrode verwendet, und
d) danach die so erzeugte Metallschicht (5) vom Substrat (1) trennt und die Klebstoffschicht (2) sowie die Flockstäbchen (4) von der Metallschicht (5) entfernt.

2. Verfahren nach Anspruch 1, **dadurch gekennzeichnet**, daß man als elektrisch leitfähige Struktur ein Metallnetz (3) verwendet, das man nach dem Auftragen der Klebstoffschicht (2) auf das Substrat (1) zumindest teilweise in die Klebstoffschicht (2) eindrückt.

3. Verfahren nach Anspruch 1 oder 2, **dadurch gekennzeichnet**, daß man zum Erzeugen der elektrisch leitfähigen Struktur ein zumindest an seiner Oberfläche aus einem elektrisch leitfähigen Material bestehendes Substrat (1) verwendet, wobei man dann die Klebstoffschicht (2) in gleichmäßig strukturierter Form, vorzugsweise durch Siebdruck, so auf das Substrat (1) aufträgt, daß dessen Oberfläche nur partiell von der Klebstoffschicht (2) bedeckt ist, wobei die nicht bedeckten Partien (6) der Substratoberfläche die elektrisch leitfähige Struktur bilden.

4. Verfahren nach einem der Ansprüche 1 bis 3, **dadurch gekennzeichnet**, daß man zum Erzeugen der Klebstoffschicht (2) einen elektrisch leitfähigen Kleber verwendet, so daß die Klebstoffschicht zugleich die elektrisch leitfähige Struktur bildet.

5. Verfahren nach Anspruch 4, **dadurch gekennzeichnet**, daß man zum Erzeugen der Klebstoffschicht eine Metallschmelze und als Flockstäbchen (4) eine hitzebeständige Faser verwendet.

6. Verfahren nach einem der Ansprüche 1 bis 5, **dadurch gekennzeichnet**, daß man die Flockstäbchen (4) mit einem deren Material angreifenden Lösungsmittel aus der Metallschicht (5) auswäscht.

7. Filtermaterial aus einer durch galvanisches Abscheiden von Metall hergestellten, mit Mikroöffnungen versehenen Metallschicht, **dadurch gekennzeichnet**, daß in der Metallschicht (5) eine Vielzahl von sich im wesentlichen parallel zueinander und von einer Schichtseite zur anderen Schichtseite erstreckenden, aus der Metallschicht beidseitig herausragenden Fasern (4) eingelagert wurden, die zur Bildung der Mikroöffnungen (7) aus der Metallschicht (5) herausgelöst sind.
